Europäisches Patentamt

(19) **European Patent Office**

Office européen des brevets

(11) Publication number: **0 018 098**
A1

(12) # EUROPEAN PATENT APPLICATION

(21) Application number: 80300911.7

(22) Date of filing: 24.03.80

(51) Int. Cl.³: **B 23 Q 3/10,** B 25 B 5/14,
B 23 K 37/04

(30) Priority: 31.03.79 GB 7911379
18.02.80 GB 8005336
18.02.80 GB 8005337

(43) Date of publication of application: 29.10.80
Bulletin 80/22

(84) Designated Contracting States: **AT BE CH DE FR GB IT
LU NL SE**

(71) Applicant: **Towrless, Thomas Travall, 15 Lostock View
Lostock Hall, Near Preston Lancashire, PR5 5HL (GB)**

(72) Inventor: **Towrless, Thomas Travall, 15 Lostock View
Lostock Hall, Near Preston Lancashire, PR5 5HL (GB)**

(74) Representative: **Dodd, David Michael,
ROYSTONS 531 Tower Building Water Street, Liverpool
L3 1BA (GB)**

(54) **Improvements in and relating to clamps and jigs.**

(57) The invention concerns devices (10) in which work-pieces are held by cams (14) which are rotatably accommodated in holes (12) in a base (11) until their working surface urges the workpiece against an abutment means (15), which may be fixed adjustable.

The devices of the invention may be in the form of clamps and jigs, particularly mitre clamps for making right angle joints in, for example, wood for picture framing, universal jigs for holding workpieces of any size or shape, and welding jigs for holding parts to be welded at any desired angle.

- 1 -

Applicant:     Thomas Travall Towriess

Title:     Improvements in and relating to clamps
and jigs

## DESCRIPTION

This invention concerns clamps and jigs.

Clamps and jigs are required for many purposes
such as for holding workpieces so that drilling,
milling and welding operations can be carried out
on them and for jointing.   Such clamps and jigs are
often complicated and difficult to use.

This invention seeks to provide a relatively
simple but effective means of holding workpieces so
that a desired operation can be carried out thereon.

Accordingly this invention provides a device
for holding one or more workpieces in which one or
more cams are rotatable to urge the workpiece against
an abutment means.

Preferably the device has a base with a series
of holes or openings for accommodating spigots or pegs
of cams which are thus rotatable.   The abutment means
may be integral with the base or may be attachable to
the base, say by pegs in the holes or openings.

The shape of the cams is preferably generated
from a Archimedean spiral and this ensures that the
cam exerts a constant pressure across its entire working
surface.   A or each cam may be provided with an arm to facilitate rotation thereof.   The holes or
openings in which the cams are accommodated are
preferably spaced apart slightly less than the working
distance of the cam.   The working distance is defined
as the difference between the longest and shortest
radii of the cam.

The cams are usually made from plastics material,
say by injection moulding although any other suitable
material may be used, such as metal.  However, the
spigots or pegs and arms are preferably made of metal
and fixed in the cams by any  suitable method such
as screwthreading or adhesive.

A first preferred form of the invention is that
of a mitre clamp, principally for use in forming right
angle joints in wood say for picture frames.   In
this embodiment a base has a pair of clamping faces
or walls forming a right angle and perpendicular to
the base, and a series of holes, usually four spaced
from each wall, successive holes of each series being
further away from its wall.   In use the two pieces
of wood forming the joint are placed against the
walls, adhesive or the like having been applied to
mitred ends of the pieces and a cam placed in the
appropriate hole of each series, depending on the width
of the pieces, and rotated until the pieces are
secured.   The rotating of the cams has the advantage
of urging the two pieces together thus ensuring the formation of a firm joint.

A second preferred form of the invention is that of a universal jig.  This embodiment is envisaged for securing workpieces of any shape and comprises a base which has a plurality of holes formed therein, usually at regular intervals over its surface.  A plurality of pegs, preferably shouldered pegs, and cams are provided, so that an appropriate number of pegs can be fitted into holes of the base, the workpiece placed against the pegs and cams placed in other appropriate holes and rotated until they urge and secure the workpiece against the pegs.

The universal jig embodiment of this invention is to be used mainly as a drilling and milling jig, although it can be used as a means for clamping any workpiece or irregular profile whilst it is machined or worked on by hand.

A guide plate for drilling operations may be used with the universal jig, and this can be achieved by providing pegs shouldered at both ends to fit holes in the jig base and holes in corner parts of the guide plate.  Drill guide holes are provided in the guide plate and are usually formed by bushes made of hardened material.

For a larger or cumbersome workpiece, it may be advantageous for a cam or cams to be positioned higher than base level, in which case a jacking block

0018098

may be provided. Such a block will have means for securing it to the jig base, such as pegs to fit the base holes, and means for rotatably accommodating one or more cams.

A third preferred embodiment of this invention is that of a welding jig, although it may be put to other uses. In this embodiment a base is provided with a pair of clamping faces or walls pivotable so as to form any desired angle adjacent ends thereof at which two workpieces are to be joined, and a series of holes for each wall, the holes being to accommodate cams rotatably. The walls are preferably each rotatable through $90^o$ and means may be provided for fixing the walls in position once a desired angle is formed. For example, a screw threaded hole may be provided at the end of each of the walls remote from the pivot point and the base provided with slots following the arc of possible movement of the threaded holes so that a bolt may be inserted via the slots into the threaded hole to fix the walls in position.

The welding jig is particularly useful in the manufacture of boxes and tanks as will be described later.

The mitre clamp base is suitably made by die casting of an appropriate metal and drilling and reaming to form the required holes. Bases for the other embodiments may be made from steel plate drilled and reamed to form the required holes.

The use of cams to secure workpieces has the
advantage that it is extremely easy and quick to
adjust and clamp securely workpieces compared
with conventional methods.

This invention will now be further described, by
way of example only, with reference to the accompanying
drawings in which:-

Figure 1 is a plan view of a mitre clamp;

Figure 2 is a front elevation of the mitre clamp
of Figure 1;

Figure 3 is a partial view of the mitre clamp of

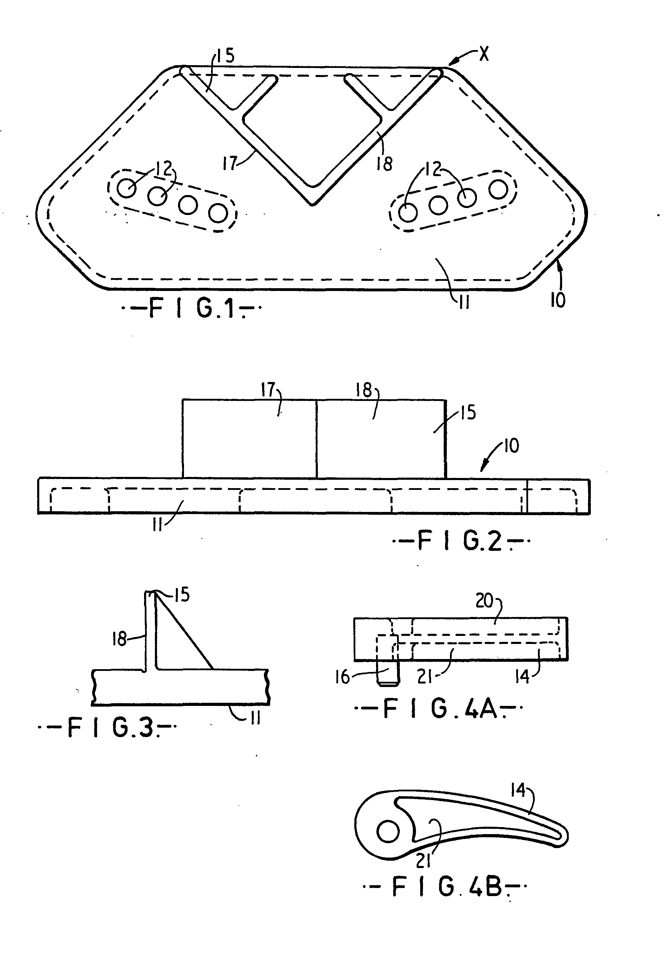

Figures 1 and 2 in the direction of the arrow X in
Figure 1;

Figures 4A and 4B show side and plan views
respectively of one form of cam;

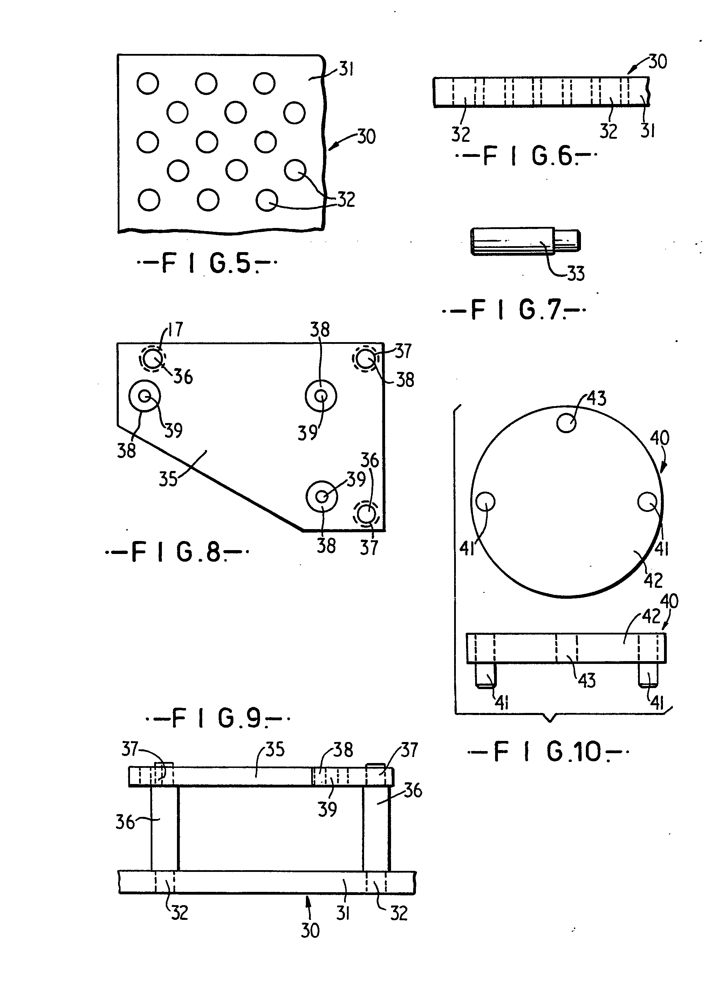

Figure 5 is a plan view of a universal jig;

Figure 6 is a section through the jig of Figure
5;

Figure 7 shows a peg for use with the jig of
Figures 5 and 6;

Figure 8 is a plan view of a guide plate for use
with the jig of Figures 5 and 6;

Figure 9 is a side elevation of the jig of Figures
5 and 6 fitted with the guide plate of Figure 8;

Figure 10 shows a jacking block for use with the
jig of Figures 5 and 6;

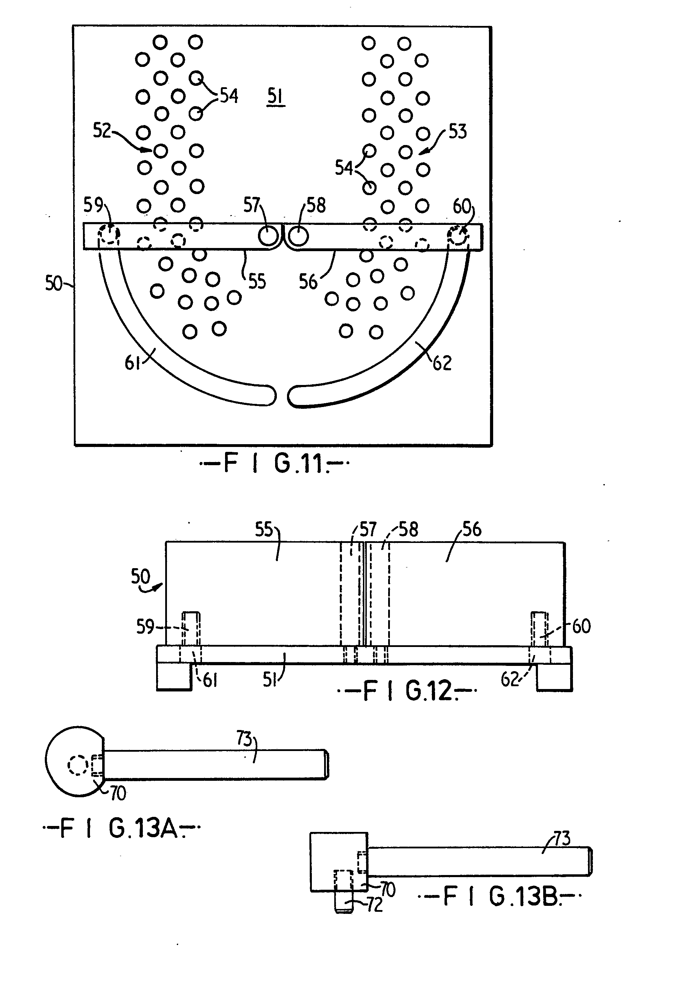

Figure 11 is a plan view of a welding jig;

Figure 12 is a front elevation of the welding jig of Figure 11;    and

Figures 13A and 13B show plan and side respectively of another form of cam.

Referring to Figures 1 to 4, a mitre clamp 10 comprises a base 11 having two series of holes 12 for accommodating cams 14 such as shown in Figures 4A and B and an upstanding part 15.   This part 15 has two walls 17, 18 at right angles to each other and perpendicular to the base 10.

The shape of the cam 14 is generated from an Archimedean spiral and is usually made by injection moulding of plastics material.   To save material, the cam is recessed at 20, 21.    The cam 14 has a peg 16 which fits the holes 12.

The base 10 will usually be made as a die-casting and the underside of the base may be recessed as shown to save materials.

The mitre clamp is useful for constructing right angle joints in wood, the two pieces of wood being placed against the walls 17, 18 and being held in position by inserting a cam 14 in an appropriate hole 12 for each piece and rotating the cams until the pieces are secure.   The cams have the advantage of forcing the pieces together to ensure a good strong joint.

Turning to Figures 5 to 10, a universal jig 30 comprises a base 31 having a series of holes 32,
usually formed by drilling and reaming for
accommodating shouldered pegs 33 and cams 14 (as
shown in Figures 4A and 4B).

In use, pegs 33 are inserted in appropriate holes
32, a workpiece placed against the pegs 33 and cams 14
placed in appropriate holes and rotated until the workpiece is secured.

In addition a guide plate 35 can be fixed over
the base 31 on pegs 36 shouldered at each end to fit
holes 32 in the base and holes 37 in the guide plate
35.    The guide plate 35 has a plurality of hardened
guide bushes 38 inserted in holes therein to provide
guide holes 39 for drill bits and the like.

For larger or cumbersome workpieces, it may be
advantageous for the cam to be positioned higher than
the base level, in which case a jacking block 40 (see
Figure 10) may be used.   The jacking block 40 has a
circular base 42 provided with a pair of diametrically
opposed pegs 41 to fit holes 32 of the universal jig
base 31 and a hole 43 to accommodate a cam 14.

It will be appreciated that the jacking block
base may be any desired shape and have any number of
pegs 41 provided that they are sufficient to prevent
the block moving when in use.   Also, more than one hole
may be provided to accommodate cams.

The universal jig 30 can be used to secure any workpiece, no matter how irregular its shape is, for any purpose.    Usually the universal jig will be used to secure a workpiece for drilling or milling by machine or by hand.

Referring to Figures 11 to 13, a welding jig 50 comprises base 51 having two series 52, 53 of holes 54 and a pair of walls 55, 56 rotatable about posts 57, 58 respectively through an angle of 90°.    The walls 55, 56 have at their ends remote from the posts 57, 58 screw-threaded holes 59, 60 for receiving bolts  or the like (not shown) via arcuate guide slots 60, 62 to secure the walls 55, 56 in desired positions.

Cams 70 (see Figures 13A and B) are for use with the jig 50 and have a peg 72 which fits the holes 54 of the jig.    The cam itself is again generated from an Archimedean spiral and is provided with an arm 73 for use in rotating the cam when in a hole.

In use, a workpiece or parts thereof are placed on the base 51, the walls rotated to suitable positions, cams are lifted in appropriate holes and rotated to secure the workpiece(s) for welding.

The use of the jig 50 is, of course, not exclusively for welding workpieces but is particularly useful in welding sheet metal and fabrication shops or indeed, any workshop where two or more pieces of material are required to be welded together at any angle.    The jig can be adjusted to take a wide range of materials and sections such as "H" rolled steel

0018098

joists.    Obviously the size of the jig used will
be chosen depending on the size of the pieces to be
welded.

The welding jig is especially useful in the
manufacture of boxes or tanks, where it is required
to hold metal plates together during welding.    This
can be achieved by placing a jig at each end of a
joint.    In fact, the box or tank could be completely
assembled using the appropriate numbered jigs prior to
welding.

It will be appreciated that other uses may be
made of the specifically described embodiments other
than those mentioned.    However, it will be
appreciated that the invention provides a simple but
effective means for securing objects so that they can
be worked on.

Agents:   ROYSTONS                              P821

Applicant:    Thomas Travall Towriess

Title:    Improvements in and relating to clamps
                                            and jigs

## CLAIMS

1.    A device for holding workpieces wherein one or more cams are rotatable so that their working surface urges the workpiece against an abutment means.

2.    A device as claimed in claim 1 which comprises a base having one or more series of holes or openings for accommodating rotatably spigots of cams.

3.    A device as claimed in claim 1 or 2 wherein the abutment means is integral with the base.

4.    A device as claimed in claim 1 or 2 wherein the abutment means is attachable to the base.

5.    A device as claimed in claim 1 or 2 wherein the position of the abutment means is adjustable.

6.    A device as claimed in any one of claims 1 to 5 wherein the shape of the cams is generated from an Archimedean spiral.

7.    A device as claimed in any one of claims 1 to 6 wherein the holes or openings in the base are spaced apart less than the working distance (as hereinbefore defined) of the cams.

8.    A mitre clamp comprising a base having a pair of walls forming a right angle and perpendicular to the base, and a series of holes spaced from each wall, successive holes of each series being further away

0018098

from its wall, the holes being to accommodate cams rotatably.

9.     A universal jig comprising a base having a plurality of holes or openings formed therein to accommodate pegs or the like as abutment means and cams rotatably.

10.    A welding jig comprising a base having a pair of clamping faces or walls pivotable so as to form a desired angle at adjacent ends thereof and a series of holes for each clamping face or wall to accommodate cams rotatably.

Agents:  ROYSTONS                              P821

0018098

-FIG.1-

-FIG.2-

-FIG.3-

-FIG.4A-

-FIG.4B-

-F I G.5-

-F I G.6-

-F I G.7-

-F I G.8-

-F I G.9-

-F I G.10-

0018098

—F I G.11.—

—F I G.12.—

—F I G.13A.—

—F I G.13B.—

European Patent
Office

**EUROPEAN SEARCH REPORT**

0018098

Application Number

EP 80 30 0911.7

## DOCUMENTS CONSIDERED TO BE RELEVANT

| Category | Citation of document with indication, where appropriate, of relevant passages | Relevant to claim |
|---|---|---|
| X | FR - A - 1 165 817 (P.-A. RAPPARD) <br> *complete document * <br> -- | 1-4,6 |
| X | FR - A - 929 554 (H. HAGGENMÜLLER) <br> * complete document * <br> -- | 1,4-7, 9 |
| P,X | US - A - 4 157 819 (R.W. MEYER) <br> *claim 1, column 3, lines 21 to 65 * <br> -- | 1,2, 4-6,9 |
| | US - A - 2 430 613 (R.W. HODGE) <br> * column 2, line 3 to column 4, line 46 * <br> -- | 1,2,4, 5,9 |
| | AT - B - 30 928 (R. DUNNE) <br> * claim 1; fig. 1 * <br> -- | 1,3,8 |
| | GB - A - 1 010 333 (B.E. FEILDING) <br> * claims 1 to 3 * <br> -- | 1,5,6 |
| | DD - U - 13 196 (H. URBSCHAT) <br> * claim 1 * <br> -- | 1 |
| | DE - B - 1 182 511 (FLEISSNER GMBH) <br> * claim 2; fig. 4 * <br> -- | 10 |
| | US - A - 3 827 685 (S.B. WENNES) <br> * claim 1; column 2, lines 14 to 29 * <br> -- | 1,5,6 |

./..

### CLASSIFICATION OF THE APPLICATION (Int. Cl.3)

B 23 Q  3/10

B 25 B  5/14

B 23 K  37/04

### TECHNICAL FIELDS SEARCHED (Int.Cl.3)

B 23 B 47/28

B 23 K 37/04

B 23 Q  3/00

B 25 B  5/00

B 25 B 11/02

B 27 G  5/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search <br> Berlin | Date of completion of the search <br> 10-07-1980 | Examiner <br> MARTIN |
|---|---|---|

0018098

European Patent
Office

**EUROPEAN SEARCH REPORT**

Application number

80 30 0911.7
– page 2 –

## DOCUMENTS CONSIDERED TO BE RELEVANT

| Category | Citation of document with indication, where appropriate, of relevant passages | Relevant to claim |
|----------|------------------------------------------------------------------------------|-------------------|
| A | US – A – 1 954 708 (H.W. MAAS) | |
| A | CH – A – 399 878 (O. WAGENER) | |
| A | US – A – 3 608 886 (G.Y. GREENE) | |
| A | DE – A – 2 117 678 (R.T. FOGG) | |

**CLASSIFICATION OF THE APPLICATION (Int. Cl.3)**

**TECHNICAL FIELDS SEARCHED (Int. Cl.3)**